# EUROPEAN PATENT APPLICATION

(11) **EP 4 831 095 A1**
(43) Date of publication of application: **28.10.2026**
(21) Application number: 26172487.6
(22) Date of filing: 15.04.2026
(51) Int. Cl.: B65G 47/64, B65G 47/71

(54) **APPARATUS FOR SORTING OBJECTS**

(30) Priority: 22.04.2025 IT 202500008985
(71) Applicant: A.C.M.I. - Societa' Per Azioni, 43045 Fornovo Di Taro (Parma) (IT)
(72) Inventor: DI LEVA, Daniele, 43126 PARMA (IT); BONATO, Andrea, 43015 NOCETO (PR) (IT)
(74) Representative: Ing. C. Corradini & C. S.R.L.

(57) **Abstract**

An apparatus (100) for sorting objects is described, comprising: a conveyor plane (105) adapted to restingly receive said objects and advance them along a prefixed feed direction (A), from an inlet zone (110) to an outlet zone (115); a conveying corridor (135), placed above the conveyor plane (105), having an inlet portion (140) aligned with an inflow lane (120) placed in the inlet zone (110), and an outlet portion (145) adapted to be selectively aligned with each outflow lane (125) of a plurality of outflow lanes (125) placed parallel to each other in the outlet zone (115), wherein the outlet portion (145) of said conveying corridor comprises a pair of side ribs (150), extending parallel to the feed direction (A), which are reciprocally side by side and spaced apart along a transverse direction, parallel to the conveyor plane (105) and orthogonal to the feed direction (A); and two linear electric traverse motors (175), each of which is adapted to move a respective one of said side ribs (150), independently of the other, along a movement direction (B) parallel to said transverse direction.

## Description

### Technical field

The present invention relates to an apparatus for sorting objects, typically primary packaging (e.g., cans, bottles, vials or the like), in a continuous flow from an inflow lane to a plurality of outflow lanes, typically in the scope of an in-line production plant, for example to form groups of objects to be directed to different process stations positioned downstream.

### State of the art

As is known, apparatuses for sorting objects of the type mentioned above normally comprise a conveyor plane, e.g., a conveyor belt, which is adapted to advance the objects from an inlet zone of the apparatus to an outlet zone, proceeding in a prefixed straight feed direction.

In the inlet zone, the objects advance in a continuous flow, typically in a row one after the other, along a single inflow lane parallel to the feed direction.

In the outlet zone, there are instead multiple outflow lanes, parallel to the feed direction but mutually side by side in a transverse direction, to which the objects are sorted.

In order to guide the flow of objects from the inflow lane selectively into each of the outflow lanes, thereby operating the sorting, the apparatus comprises an adjustable conveying corridor, which is suspended above the conveyor plane.

This conveying corridor comprises an inlet portion, aligned with the inflow lane, and an outlet portion, movable transversely with respect to the feed direction, which is adapted to be selectively aligned with each of the outflow lanes.

In particular, the outlet portion of the conveying corridor is defined by a pair of side ribs, extending parallel to the feed direction, which are mutually spaced apart by an amount corresponding to the width of the flow of objects to be conveyed.

For example, in the case of a single-row flow, i.e., formed by objects advancing one after the other in a single row, the distance separating these two side ribs corresponds to the width of each individual object.

In some embodiments, including the one described in Italian patent application no. 102019000013920, each of the side ribs defining the outlet portion of the conveying corridor is associated with a respective electric motor which, by means of a suitable drive system, e.g., a belt, is able to move it transversally to the feed direction, independently of the other.

Thanks to these two electric motors, it is therefore possible to either move both side ribs simultaneously, keeping them at the same reciprocal distance from each other, so as to align the end section of the conveying corridor with each outflow lane, or to vary the reciprocal distance between the side ribs, e.g., to adapt the size of the conveying corridor to objects of different formats. However, these solutions are mechanically quite complex, with consequent limitations in terms of flexibility, energy efficiency and maintenance requirements.

### Disclosure of the invention

An aim of the present invention is to provide a sorting apparatus which is mechanically and constructively simpler and more compact than those currently available.

Another aim is to provide a sorting apparatus which can achieve one or more of the following benefits: increased flexibility of use, reduced energy consumption and reduced maintenance requirements.

These and other aims are achieved thanks to the features of the invention reported in independent claim 1. The dependent claims outline preferred and/or particularly advantageous aspects of the invention but not strictly necessary for implementing it.

In particular, an embodiment of the present invention provides an apparatus for sorting objects, e.g., primary packaging (including cans, bottles, vials or other), comprising:
- a conveyor plane, e.g., a conveyor belt or roller conveyor, adapted to restingly receive said objects and feed them along a prefixed feed direction, from an inlet zone to an outlet zone,
- a conveying corridor, placed above the conveyor plane, having an inlet portion aligned with an inflow lane placed in the inlet zone, and an outlet portion adapted to be selectively aligned with each outflow lane of a plurality of outflow lanes placed parallel to each other in the outlet zone,
   wherein the outlet portion of said conveying corridor comprises a pair of side ribs, extending parallel to the feed direction, which are reciprocally side by side and spaced apart along a transverse direction, parallel to the conveyor plane and orthogonal to the feed direction, and
- two linear electric traverse motors, each of which is adapted to move a respective one of said side ribs, independently of the other, along a movement direction parallel to said transverse direction.

Thanks to this solution, the independent drive of the side ribs makes it possible to both align the outlet portion with each outflow lane and to adjust the reciprocal distance between the side ribs in an automated, simple and fast manner, e.g., to adjust the width of the conveying corridor in the event of a format change.

Furthermore, the use of two linear electric motors has the advantage of eliminating all those drive systems, e.g., belts and relative pulleys, which in the solutions proposed so far are necessary to transform the rotary movement generated by the motor into a linear movement of the side ribs. As a result, the mechanical structure of the sorting apparatus is advantageously simpler and more compact.

The elimination of the aforementioned drive systems also has the advantage of reducing internal friction of the in the driveline, resulting in non-negligible energy savings which, in turn, translates into lower operating costs and a lower environmental impact.

Another advantage of eliminating these drive systems is that fewer components are subject to wear and tear (the belts, for example, are subject to deterioration and elongation), reducing the need to carry out routine and extraordinary maintenance of the apparatus and thus reducing production line downtime and maintenance costs for the end user.

Downtime and maintenance costs are also reduced when maintenance work is actually carried out, as the simpler design of the apparatus makes it more accessible to maintenance personnel. Going into more detail, each linear electric traverse motor can generally comprise:
- a primary containing electrical windings which, when energised by an alternating electric current, are adapted to generate a variable magnetic field along said movement direction, and
- a secondary, extending linearly along said movement direction, with which said magnetic fields are adapted to interact to cause a relative movement of the primary with respect to the secondary, along said movement direction.

According to an embodiment of the invention, the secondary of each linear electric traverse motor can be fixed attached to a support structure, while each side rib can be constrained to the primary of the respective linear electric traverse motor, so as to be integral therewith in displacements along the movement direction.

Thanks to this solution, each side rib is in fact directly connected to the respective linear electric traverse motor, i.e., to the primary containing the electrical windings, thus minimising the components required to transmit motion from one to the other.

Another aspect of the invention provides that each side rib may be vertically free with respect to the primary of the respective linear electric traverse motor, and that it may be slidingly coupled and vertically supported to/from one or more linear guides fixed to the support structure, oriented parallel to the movement direction.

Thereby, the weight of the side rib weighs exclusively on the linear guides on which it is hung, without exerting any pressure on the linear electric traverse motor.

Therefore, being subjected to relatively low stresses, the linear electric traverse motor is subject to less internal friction and does not require a particularly robust structure.

This allows it to have rather compact dimensions, reducing inertia and improving the precision of displacements, and to have to express a not particularly high power, improving the overall economy and energy efficiency of the apparatus.

According to a preferred aspect of the invention, each linear electric traverse motor can be an inductive type of linear electric motor, the secondary of which has no permanent magnets.

For example, the secondary of the linear electric traverse motor can be made of metal, including steel, aluminium or copper, or of any other material, typically conductive and preferably ferromagnetic, in which the variable magnetic field generated by the primary is capable of inducing eddy currents (or Foucault currents).

These eddy currents generate, in turn, their own magnetic field which, interacting with the magnetic field of the primary, creates an electromagnetic force which causes the relative displacement between the primary and secondary along the movement direction.

Another aspect of the invention provides that the secondary of each linear electric traverse motor can be shaped like a rod, e.g., having a circular cross-section, which is axially and slidingly threaded into a through-hole, e.g., a cylindrical through-hole, of the corresponding primary. Thereby, the electrical windings of the primary can surround the rod defining the secondary, achieving a particularly efficient and compact linear electric motor.

A further aspect of the invention is that each linear electric traverse motor can be operatively connected to an encoder, which is adapted to measure the position of the primary with respect to the secondary, along the movement direction.

By means of these encoders, the linear electric traverse motors are able to automatically position the side ribs with extreme precision and speed in the positions required from time to time (e.g., by an electronic control system), either to carry out the format adjustment, or to position the start of the duty cycle, or for their dynamic displacement during the duty cycle.

For example, the encoder connected with each linear electric traverse motor can be an absolute encoder, so that position information is not lost in the event of a power down.

However, it is not ruled out that, in other embodiments, the encoder connected to each linear electric traverse motor could be an incremental encoder or any other type.

All this without the need for manual adjustment and without the need to stop the conveyor plane. According to a preferred embodiment of the invention, each side rib can comprise:
- a first portion,
- a second portion slidingly coupled to the first portion so that it can slide with respect thereto in a sliding direction, parallel to the feed direction, between a retracted position and an extracted position, and
- a linear electric drive motor adapted to move the second portion in said sliding direction.

Thereby, the second portions of the side ribs can be moved from the retracted position to the extracted position, effectively lengthening the outlet portion of the conveying corridor, so that objects can be accompanied up to near the outflow lanes.

Like the previous ones, each linear electric drive motor can also generally comprise:
- a primary containing electrical windings which, when energised by an alternating electric current, are adapted to generate a variable magnetic field along said sliding direction, and
- a secondary, extending linearly along said sliding direction, with which said magnetic fields are adapted to interact to cause a movement of the primary with respect to the secondary, along the sliding direction.

According to an embodiment of the invention, the secondary of each linear electric drive motor can be fixed to the first portion of the respective side rib, while the second portion of each side rib can be constrained to the primary of the respective linear electric drive motor, so as to be integral therewith in movements along said sliding direction.

Thanks to this solution, the second portion of each side rib is in fact directly connected to the respective linear electric drive motor, i.e., to the primary containing the electrical windings, thus minimising the components required to transmit motion from one to the other.

Another aspect of the invention provides that the second portion of each side rib can be vertically free with respect to the primary of the respective linear electric drive motor, and that it can be vertically supported by the corresponding first portion, e.g., through a system of guides and sliding blocks.

Thereby, the weight of the second portion of each side rib weighs exclusively on the first portion to which it is slidingly coupled, without exerting any pressure on the corresponding linear electric drive motor.

Therefore, being subjected to relatively low stresses, the linear electric drive motor is subject to less internal friction and does not require a particularly robust structure.

This allows it to have rather compact dimensions, reducing inertia and improving the precision of displacements, and to have to express a not particularly high power, improving the overall economy and energy efficiency of the apparatus.

According to a preferred aspect of the invention, each linear electric drive motor can also be an inductive type of linear electric motor, the secondary of which has no permanent magnets.

For example, the secondary of the linear electric drive motor can be made of metal, including steel, aluminium or copper, or of any other material, typically conductive and preferably ferromagnetic, in which the variable magnetic field generated by the primary is capable of inducing eddy currents (or Foucault currents).

These eddy currents generate, in turn, their own magnetic field which, interacting with the magnetic field of the primary, creates an electromagnetic force which causes the relative displacement between the primary and secondary along the sliding direction.

Another aspect of the invention provides that the secondary of each linear electric drive motor can be shaped like a rod, e.g., having a circular cross-section, which is axially and slidingly threaded into a through-hole, e.g., a cylindrical through-hole, of the corresponding primary. Thereby, the electrical windings of the primary can surround the rod defining the secondary, achieving a particularly efficient and compact linear electric motor.

A further aspect of the invention is that each linear electric drive motor can be operatively connected to an encoder, which is adapted to measure the position of the primary with respect to the secondary, along the sliding direction.

By means of these encoders, the linear electric drive motors are able to position and move the second portions of the side ribs, simultaneously and maintaining their reciprocal alignment, efficiently and reliably.

For example, the encoder connected to each linear electric drive motor can be an incremental encoder, so as to achieve the aforesaid advantage while remaining within the scope of a relatively inexpensive solution.

However, it is not ruled out that, in other embodiments, the encoder connected to each linear electric drive motor could be an absolute encoder or any other type.

According to a different aspect of the invention, the inlet portion of the conveying corridor can comprise, in turn, a pair of front side ribs, extending parallel to the feed direction, which are reciprocally side by side and spaced apart along a flanking direction, parallel to the conveyor plane and orthogonal to the feed direction thereof, motorised adjustment means being provided for adjusting the reciprocal distance between said front side ribs, along said flanking direction.

With this solution, for example in the event of format changes, it is advantageously possible to adjust the width of the conveying corridor, even at the inlet portion, in an automated and therefore simple, fast and precise manner.

In this respect, the motorised adjustment means can, for example, comprise:
- a threaded shaft having axis parallel to said flanking direction and rotatably coupled to a support structure,
   wherein said threaded shaft comprises a first section with a thread to the right and a second section with a thread to the left,
- two nuts screwed respectively on the first and second section of said threaded shaft, and
- an electric motor adapted to rotate the threaded shaft around the axis thereof,
   wherein each front side rib is constrained to a respective one of said nuts, so as to be integral therewith in displacements along the axis of the threaded shaft.

These expedients represent a particularly simple and reliable solution for moving both rear ribs at the same time, with precision and speed.

### Brief description of the drawings

Further features and advantages of the invention will be more apparent after reading the following description provided by way of a non-limiting example, with the aid of the figures illustrated in the accompanying drawings.
Figure 1 is a perspective view of an apparatus for sorting objects according to an embodiment of the present invention.
Figure 2 is a top view of the apparatus of Figure 1.

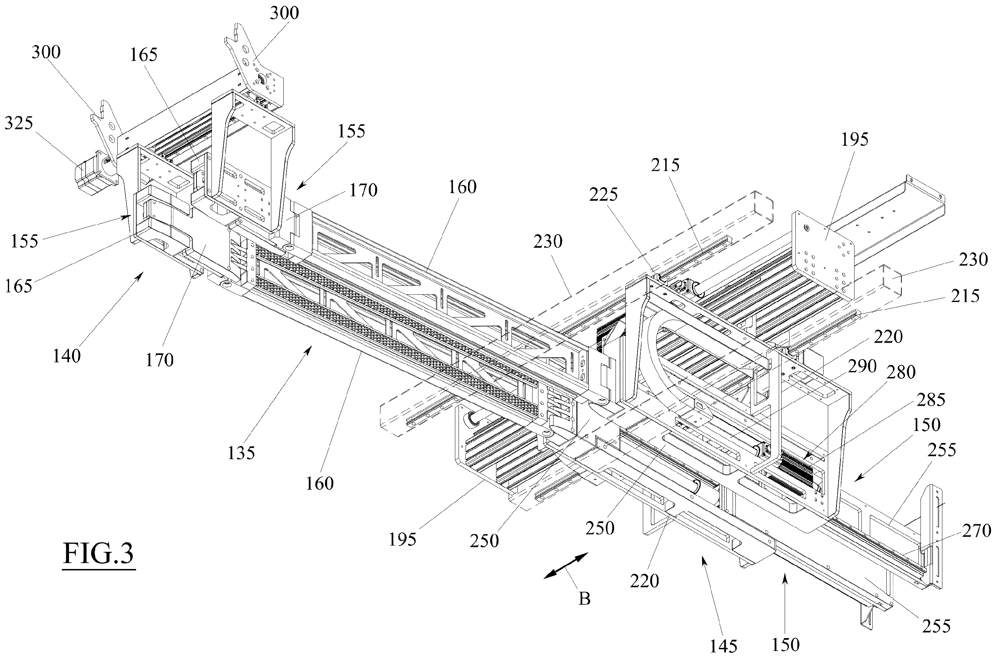

Figure 3 is a perspective view, from below, of the conveying corridor of the apparatus of Figure 1, in which some parts of the apparatus have been omitted to better highlight the features of the finding.

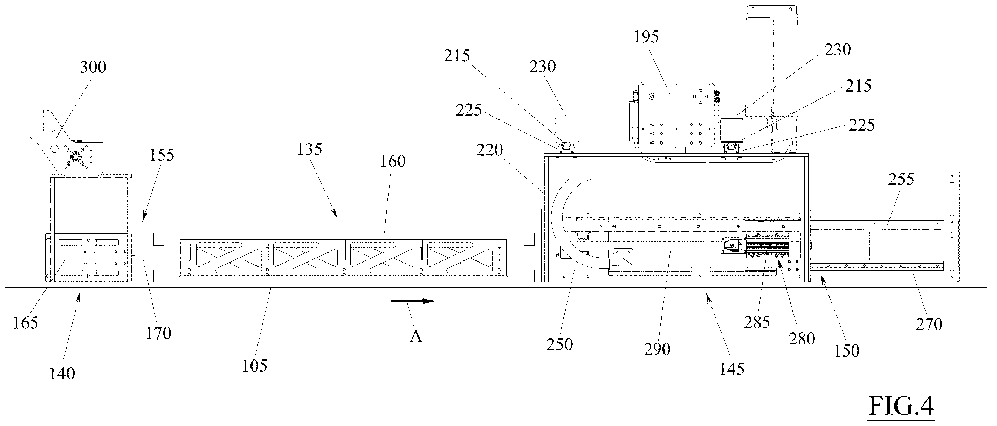

Figure 4 is a side view of the conveying corridor of Figure 3.
Figure 5 is a top view of the conveying corridor of Figure 3.

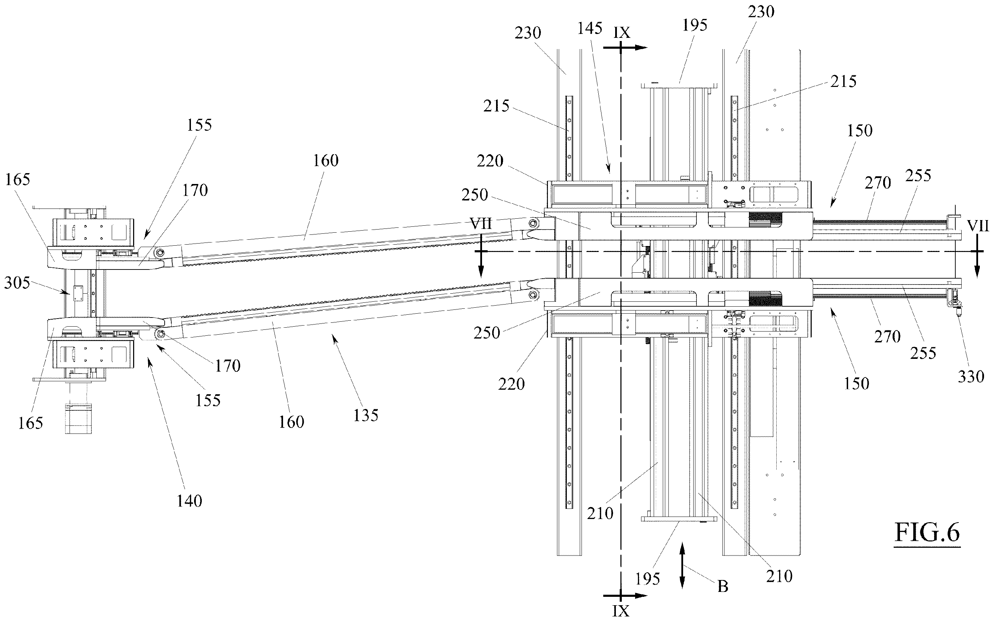

Figure 6 is a bottom view of the conveying corridor of Figure 3.
Figure 7 is the section VII-VII indicated in Figure 6 shown in an enlarged scale.
Figure 8 is the portion of Figure 4 shown in an enlarged scale.
Figure 9 is the section IX-IX indicated in Figure 6 shown in an enlarged scale.

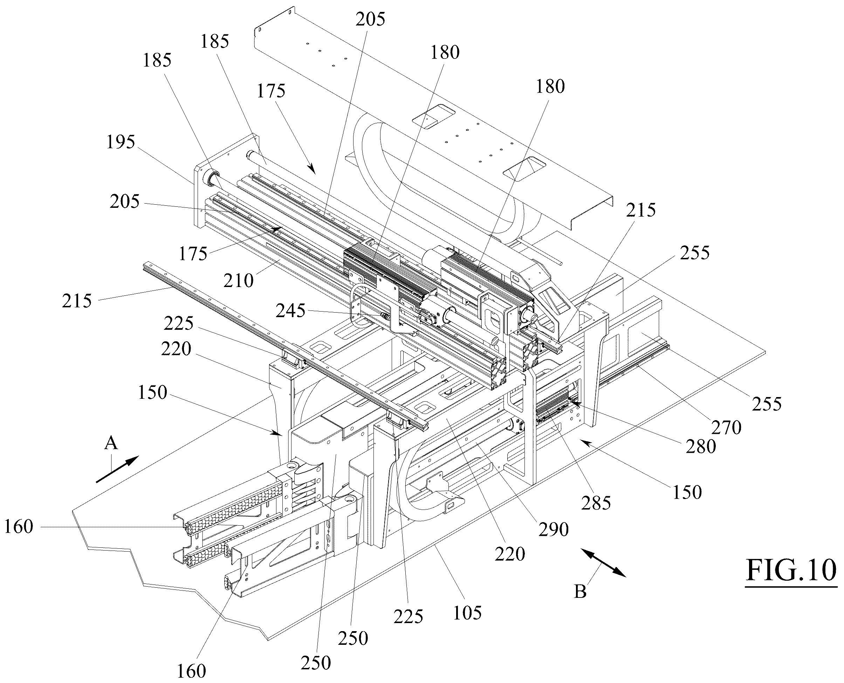

Figure 10 is a perspective top view of the portion illustrated in Figure 8.
Figure 11 is the perspective view of Figure 10, shown with the rear ribs in the respective zero machine positions.
Figure 12 is an enlarged detail of Figure 10.
Figure 13 is an enlarged detail of Figure 3.
Figure 14 is an enlarged detail of Figure 6.
Figure 15 is a perspective view of one side of the conveying corridor of the apparatus of Figure 1.
Figure 16 is an enlarged detail of Figure 15.

### Detailed description

The apparatus 100 which is the subject matter of the present invention, an example of which is illustrated in the accompanying figures, is an apparatus for sorting a continuous flow of objects, typically of primary packaging, such as cans, bottles, vials or other.

In particular, the apparatus 100 can be used within a production line, for example within a packaging line, to divide a flow of objects, coming from an upstream process station, into a plurality of separate flows of objects to be directed to different downstream process stations.

The apparatus 100 firstly comprises a conveyor plane 105, which is generally adapted to provide a surface, preferably horizontal, on which the objects advance along a predetermined straight feed direction A parallel to the surface itself.

In the example shown, the conveyor plane 105 is a conveyor belt, but it is not excluded that, in other embodiments, it could be a roller conveyor or other similar device.

In all cases, the conveyor plane 105 is preferably motorised, so that the displacement of the objects along the feed direction A is automated.

Proceeding in the feed direction A, the objects are transferred by the conveyor plane 105 from an inlet zone 110 to an outlet zone 115 of the apparatus 100.

In the inlet zone 110, there is an inflow lane 120, generally having a width less than the width of the conveyor plane 105 and positioned, for example but not necessarily, in the centre of the latter, along which the objects come advancing in a continuous flow along the feed direction A.

The flow of objects advancing along the inflow lane 120 can be a single-row flow, i.e., formed by a single row of objects advancing, one after the other, in the feed direction A.

In this case, the width of the inflow lane 120 can essentially coincide with the width of a single object, e.g., a can, a bottle or a vial.

However, it is not excluded that in other embodiments, the flow of objects advancing along the inflow lane 120 can be multi-row or, in any case, that the advancing front of the flow is formed by several objects side by side in a more or less orderly manner.

The inflow lane 120 can be defined by a conveyor plane, coplanar to the conveyor plane 105 and of a narrower width, and/or by a sliding surface, also coplanar to the conveyor plane 105 and of a narrower width, on which the objects slide, for example, due to the thrust exerted by the objects following them.

However, it is not excluded that in other embodiments, the inflow lane can simply be a portion of the conveyor plane 105, on which the objects are arranged in rows or otherwise grouped so that their advancing front is narrower than the width of conveyor plane 105 itself.

There are instead multiple outflow lanes 125 in the outlet zone 115 which are coplanar, parallel to the feed direction A and reciprocally side by side in the transverse direction.

Each of these outflow lanes 125 generally has a lower width with respect to the width of the conveyor plane 105, for example a width substantially equal to the width of the inflow lane 120, and is adapted to receive at least a part of the flow of objects coming from the inflow lane 120, then continuing to advance them in a continuous flow in the feed direction A.

In the example illustrated, each of these outflow lanes 125 is at least partly defined by a portion of the conveyor plane 105 preferably delimited and separated from the others by at least one separating septum 130.

Each outflow lane 125 can then possibly comprise a further conveyor plane and/or sliding surface, not illustrated as being conventional in itself, to distance the objects.

In order to guide the flow of objects coming from the inflow lane 120 selectively into each of the outflow lanes 125, thereby carrying out the sorting (or splitting of the flow), the apparatus 100 comprises a conveying corridor 135.

This conveying corridor 135 is placed above the conveyor plane 105, so that it is closed below by the latter, extending in a plane parallel thereto.

The conveying corridor 135 also has a width less than that of the conveyor plane 130, e.g., substantially equal to that of the inflow corridor 120 and/or each of the outflow corridors 125, or more properly can have a width approximately equal to the width of the advancing front of the flow of objects coming from the inflow corridor 120, e.g., substantially equal to the width of a single object, in the event of a single-row flow.

The conveying corridor 135 has an inlet portion (or segment) 140 which, with respect to the feed direction A defined by the conveyor plane 105, is aligned with the inflow lane 120, and an outlet portion (or segment) 145 which, with respect to the same feed direction A, is adapted to be selectively aligned with each of the outflow lanes 125 provided in the outlet zone 115.

In particular, the outlet portion 145 comprises (or is delimited by) a pair of rear side ribs 150, extending parallel to the feed direction A, which are mutually side by side and spaced apart along a transverse direction, parallel to the conveyor plane 105 and orthogonal to the feed direction A. Of course, the distance between these rear side ribs 150 corresponds to the width of the conveying corridor 135 at its outlet portion 145.

To allow the selective alignment of the outlet portion 145 of the conveying corridor 135 with each of the outflow lanes 125, the rear side ribs 150 are generally associated with motorised movement means, which will be described in detail below, which are adapted to move them (in both directions) along a feed direction B, parallel to the aforementioned transverse direction, viz., parallel to the conveyor plane 105 and orthogonal to the feed direction A.

The inlet portion 140 of the conveying corridor 135 in turn comprises (or is delimited by) a pair of front side ribs 155, extending parallel to the feed direction A, which are reciprocally side by side and spaced apart along a prefixed transverse flanking direction parallel to the conveyor plane 105 and orthogonal to its feed direction A.

Of course, the distance between these front side ribs 155 corresponds to the width of the conveying corridor 135 at its inlet portion 140.

Preferably, the width of the conveying corridor 135 at the inlet portion 140 is equal to that at the outlet portion 145, but this is not a strictly necessary feature.

Each front side rib 155 is connected to a respective one of the rear side ribs 150, in this case to that arranged on the same side, by means of an intermediate side rib 160.

Thereby, the two intermediate side ribs 160 define a central portion (or segment) of the conveying corridor 135, adapted to guide the flow of objects from the inlet portion 140 to the outlet portion 145, possibly forcing it to deviate, sliding transversely on the conveyor plane 105, with respect to the feed direction A, for example whenever the outlet portion 145 (viz., the destination outflow lane 125) is not perfectly aligned with the inlet portion 140.

In order to allow the outlet portion 145 to align with all the outflow lanes 125, the opposite ends of each intermediate side rib 160 are respectively hinged to the corresponding front side rib 155 and to the corresponding rear side rib 150, according to articulation axes perpendicular to the conveyor plane 105.

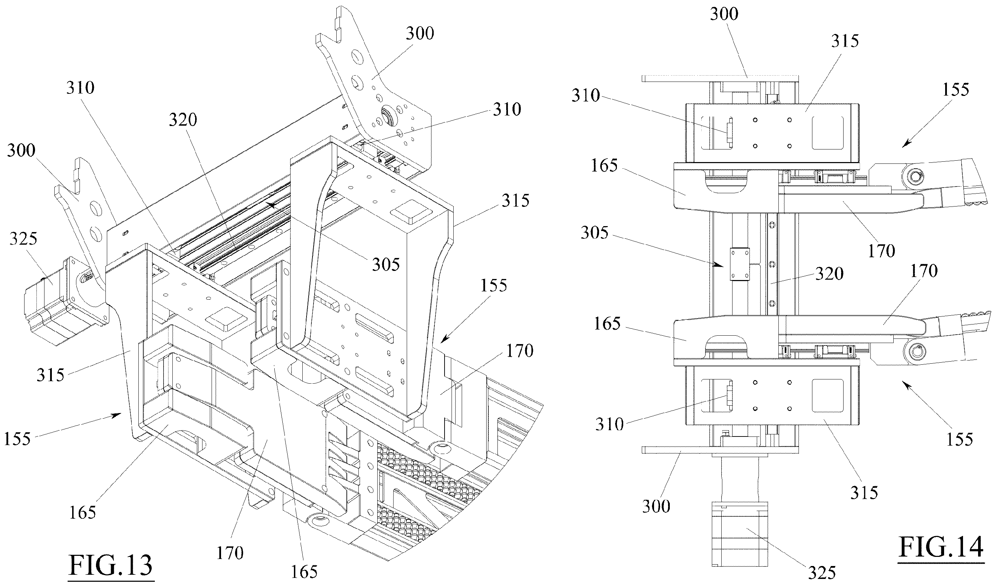

Furthermore (see also Fig. 13, 15 and 16), each front side rib 155 can be formed by two portions, a fixed portion 165 and a movable portion 170, which is slidingly coupled to the fixed portion 165, so that it can move with respect thereto along a direction parallel to the feed direction A, and to which the end of the corresponding intermediate side rib 160 is actually articulated.

In fact, this degree of freedom of the movable portion 170 makes it possible to absorb the inevitable variations in distance, between the front side rib 155 and the corresponding rear side rib 150, due to the displacements of the latter along the movement direction B.

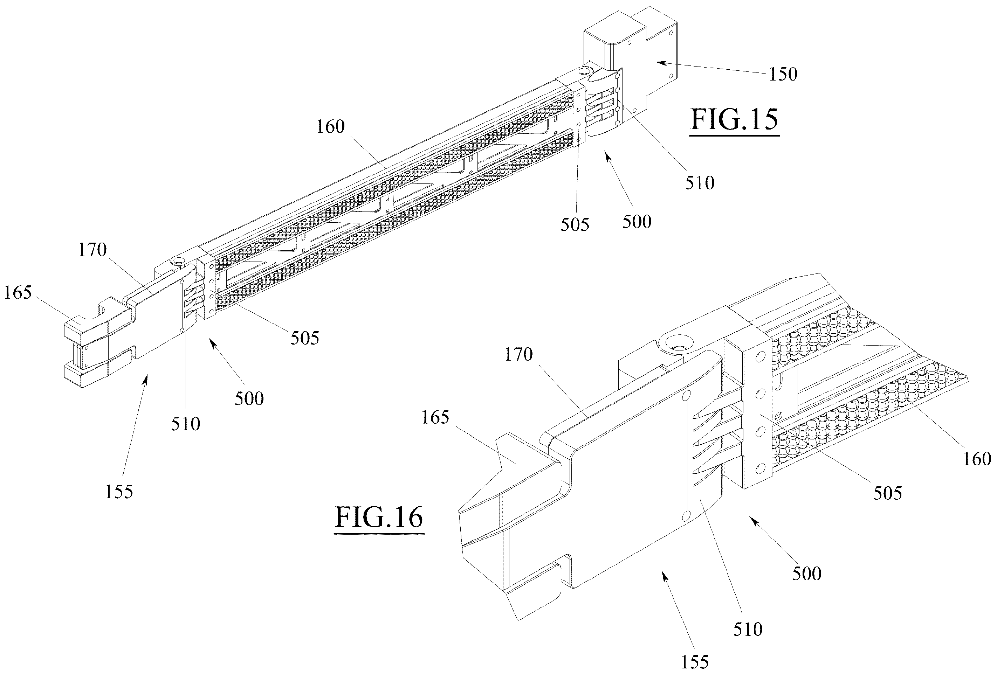

It should also be noted that, as is clearly visible in Figures 15 and 16, each of the hinge joints, with which each intermediate side rib 160 is hinged to the corresponding front side rib 155 and, respectively, to the corresponding rear side rib 150, is covered, on the side facing inside the conveying corridor 135, by a respective compensating connection, indicated overall with 500. Each of these compensating connections 500 comprises two comb-shaped terminals, a first terminal 505 fixed to the end of the intermediate side rib 160, and a second terminal 510 fixed to the end of the rear side rib 150 or, respectively, the front side rib 155.

The prongs of each terminal 505 and 510 are arranged overlapping each other in a direction parallel to the articulation axis and separated, two by two, by a gap, so that the prongs of each first terminal 505 are alternately inserted between the prongs (viz., within the gaps defined therebetween) of the corresponding second terminal 510 and vice versa.

Thereby, following any reciprocal rotation between the intermediate side rib 160 and the corresponding rear 150 and front 155 side ribs, the prongs of the first terminals 505 can slide with respect to the prongs of the second terminals 510, without creating, on the inner side of the conveying corridor 135, a sharp edge which could hinder the advancement of the objects.

In particular, the prongs of the first and second terminals 505 and 510 can be suitably shaped so that at least their inner surfaces, i.e., those facing inside the conveying corridor 135, are rounded with a certain bend radius, preferably large, so that, for any orientation, they can be capable of forming achieve a surface continuity which facilitates the sliding of the objects.

This solution can advantageously replace other solutions, belonging to the prior art, which involve making the joints between the ribs with yielding and/or flexible material.

Turning now to the motorised movement means which are indeed responsible for moving the rear side ribs 150 along the movement direction B, they comprise, for each rear side rib 150, a respective linear electric traverse motor 175.

Each of these linear electric traverse motors 175 is therefore adapted to move the respective rear side rib 150 along the movement direction B, independently of the other.

These two linear electric traverse motors 175 can be connected to an electronic control unit (not illustrated), which can be configured to activate them, either so as to be able to move both rear side ribs 150 simultaneously and in the same direction, e.g., to align the outlet portion 145 of the conveying corridor 135 with a different outflow lane 125, or so that their reciprocal distance can be varied, in a transverse direction, e.g., to adjust the width of the outlet portion 145 of the conveying corridor 135, typically in the case of a change in format of the objects to be sorted.

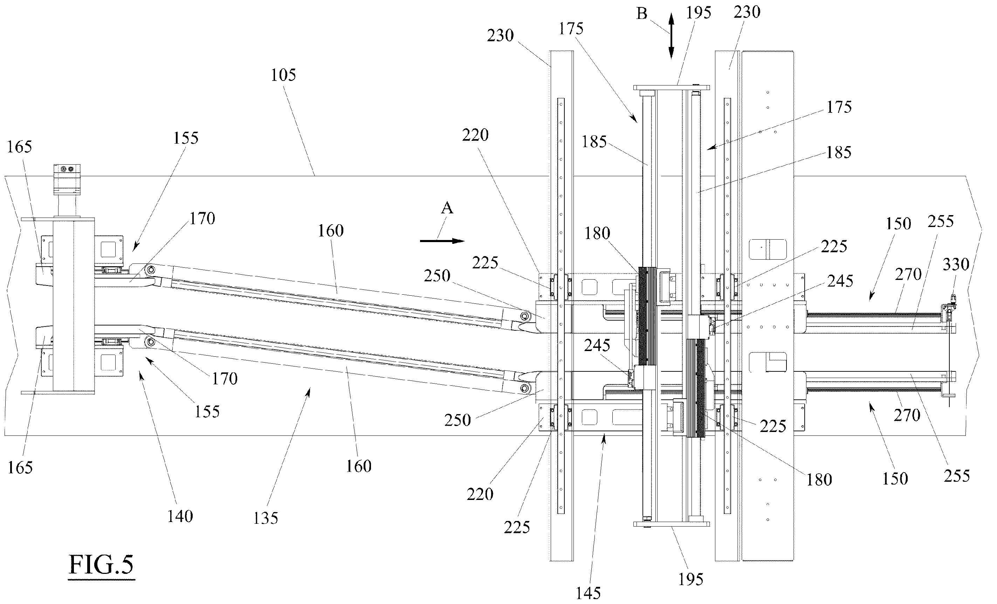

Going into more detail (see for example Fig. 5), each linear electric traverse motor 175 can comprise a primary 180 and a secondary 185 reciprocally movable along the movement direction B.

To achieve this effect, the primary 180 contains electrical windings which, when energised by an electric current, typically an alternating electric current, are adapted to generate a variable magnetic field along the movement direction B.

The secondary 185 is a body extending linearly along the movement direction B, typically for a greater length with respect to the primary 180, with which the aforesaid magnetic fields are adapted to interact, to cause the relative movement of the primary 180 with respect to the secondary 185.

This interaction could be achieved by the presence of permanent magnets along the secondary 185.

However, a preferred embodiment provides that each linear electric traverse motor 175 is an inductive type of linear electric motor, the secondary 185 of which is free of permanent magnets and is made of a material, typically conductive and preferably ferromagnetic, e.g., a metallic material, including steel, aluminium or copper, in which the variable magnetic field generated by the primary 180 is capable of inducing eddy currents (or Foucault currents).

These eddy currents generate, in turn, their own magnetic field which, interacting with the magnetic field of the primary 180, creates an electromagnetic force which causes the relative displacement between the primary 180 and secondary 185 along the movement direction B.

In the embodiment illustrated, the secondary 185 of each linear electric traverse motor 175 is configured as a rod (or bar), in this case having a circular cross-section, which is axially and slidingly threaded in a through hole, in this case a cylindrical through hole, of the corresponding primary 180.

Thereby, the electrical windings of the primary 180 can surround the rod defining the secondary 185, achieving a particularly efficient and compact linear electric motor.

According to a preferred embodiment of the finding, an example of which is illustrated in the figures, the secondary 185, e.g., the aforesaid rod, is fixed to a fixed support structure 190, thus always being stationary, while the primary 180 is actively movable with respect to the secondary 185, along the movement direction B.

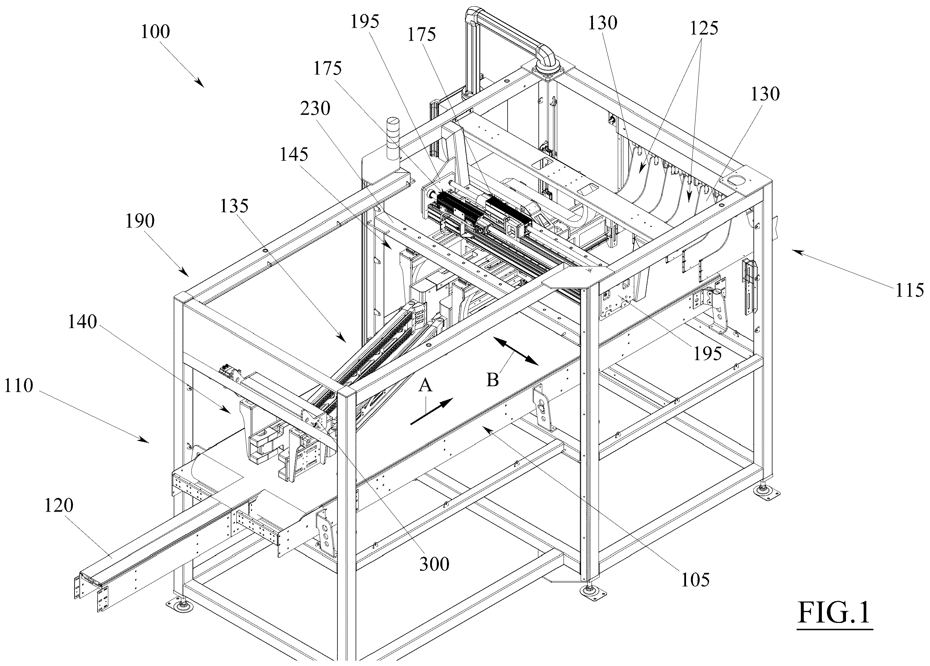

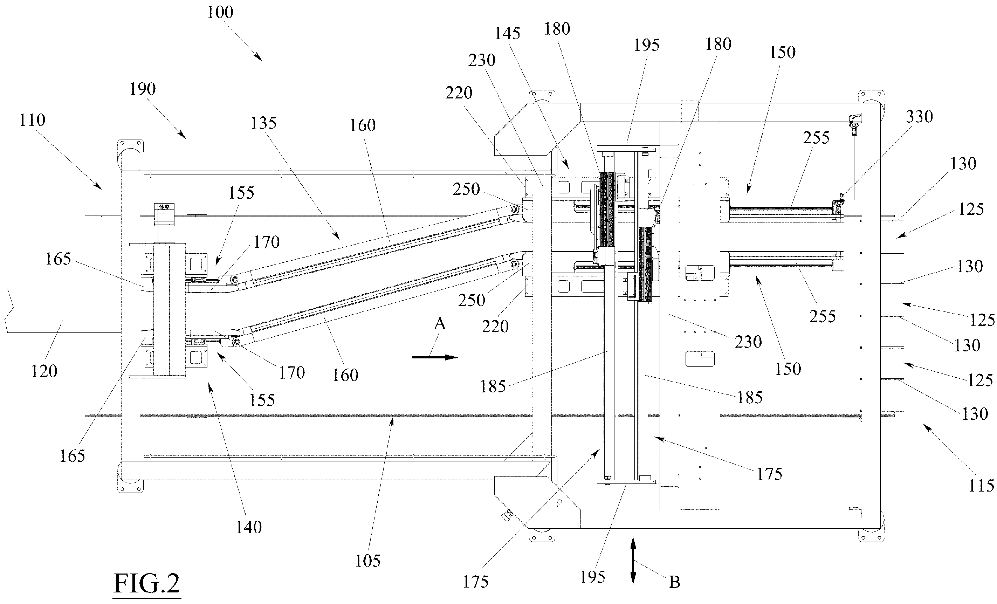

The aforementioned support structure 190 (see Figures 1 and 2) can comprise, for example, a frame or framework rested on and/or anchored to the ground, to which a pair of sidewalls 195 is fixed, arranged laterally on opposite sides of the conveyor plane 105.

The secondary 185 of each linear electric drive motor 175 is interposed and fixed between these sidewalls 195 (at the ends), so that each secondary 185 extends, along the movement direction B, above the conveyor plane 105.

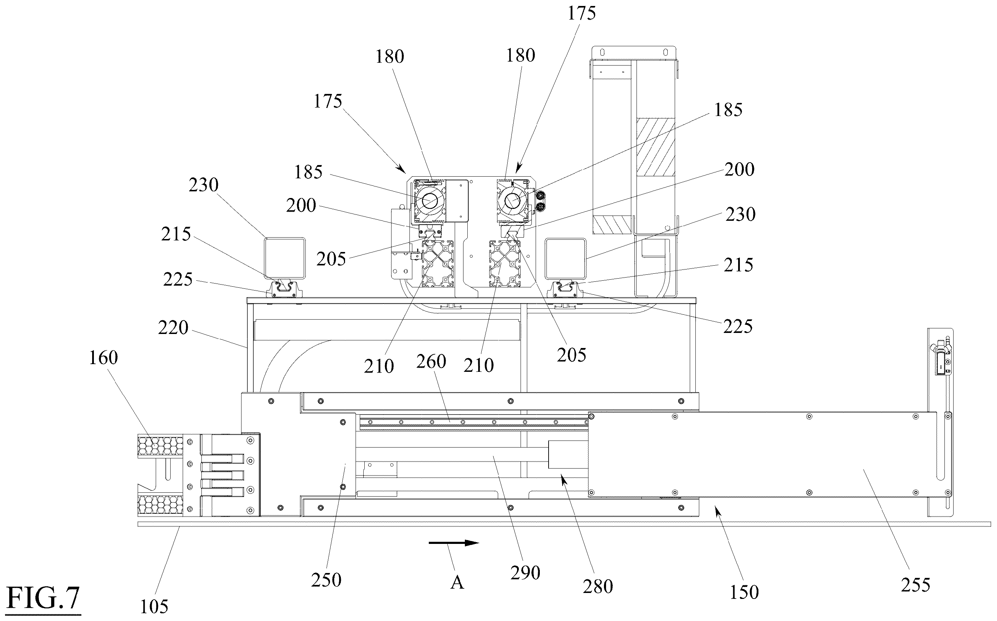

For example, the secondaries 185 of the two linear electric traverse motors 175 can lie on the same plane, parallel and elevated with respect to the conveyor plane 105, thus being positioned ahead of each other with respect to the feed direction A (see Fig. 7).

In addition to the respective secondary 185, in this case to the respective rod, the primary 180 of each linear electric traverse motor 175 can also be slidingly coupled, for example by means of one or more sliding blocks 200 integral therewith, to a respective linear guide 205, which extends parallel to the movement direction B, and is positioned, for example, at a height comprised between the secondary 185 of the corresponding linear electric traverse motor 175 and the conveyor plane 105.

Thereby, any rotation of the primary 180 around the secondary 185 can be prevented and the percentage of the weight of the primary 180 weighing on the secondary 185 can also be reduced, thereby reducing internal friction and improving the overall energy efficiency of the linear electric traverse motor 175.

The linear guide 205 can also be fixed to the support structure 190, e.g., above a respective load-bearing beam 210, which transversally surmounts the conveyor plane 105 and at the opposite ends of which the sidewalls 195 can be fixed.

Returning to the rear side ribs 150, each thereof can be positioned above the conveyor plane 105, preferably at a short distance from the latter but not in contact therewith.

For example, each rear side rib 150 can be positioned below the respective linear electric traverse motor 175 and possibly, as in the illustrated solution, also below the aforementioned load-bearing beams 210.

Each rear side rib 150 can be slidingly coupled to one or more fixed linear guides 215, in the example illustrated to a pair of reciprocally spaced linear guides 215, each extending parallel to the movement direction B, so as to surmount the conveyor plane 105.

These linear guides 215 are preferably common for both rear side ribs 150, viz., both rear side ribs 150 are slidingly coupled to the same linear guides 215.

In particular, the linear guides 215 can be positioned at a higher height with respect to the rear side ribs 150, so that the latter are substantially suspended therefrom.

For example, the linear guides 215 can lie on the same plane, parallel to and elevated with respect to the conveyor plane 105, and/or can be arranged on opposite sides of the linear electric traverse motors 175, with respect to the feed direction A.

Each rear side rib 150 can be coupled to the linear guides 215 by means of a respective supporting frame 220, which carries the rear side rib 150 below and one or more sliding blocks 225 above, each of which is slidingly coupled to a corresponding linear guide 215.

The linear guides 215 can also be fixed to the support structure 190, e.g., below a respective load-bearing beam 230, which transversally surmounts the conveyor plane 105 and whose opposite ends can be fixed to the frame or framework resting on the ground.

Each rear side rib 150 is then constrained to the respective linear electric traverse motor 175, so that it can be driven by the latter to slide along the movement direction B, e.g., guided by the aforementioned linear guides 215.

In particular, each rear side rib 150 can be constrained to the primary 180 of the respective linear electric traverse motor 175, so as to follow the displacements thereof.

In accordance with a preferred embodiment of the finding, the constraint between each rear side rib 150 and the primary 180 of the respective linear electric traverse motor 175 is a direct bilateral constraint, i.e., a constraint by which, at least in the displacements along the movement direction B, the rear side rib 150 is made integral with the primary 180 of the respective linear electric traverse motor 175.

Thereby, each displacement of the primary 180 always corresponds to an equal displacement of the respective rear side rib 150, without the need for motion drive systems.

At the same time, it is also preferable for the aforementioned constraint to leave each rear side rib 150 vertically free, viz., free to make relative vertical displacements with respect to the primary 180 of the respective linear electric traverse motor 175.

Thereby, substantially all the weight of the rear side ribs 150 weighs on the linear guides 215, thus reducing the internal friction of the linear electric traverse motors 175, whose overall energy efficiency is therefore advantageously increased.

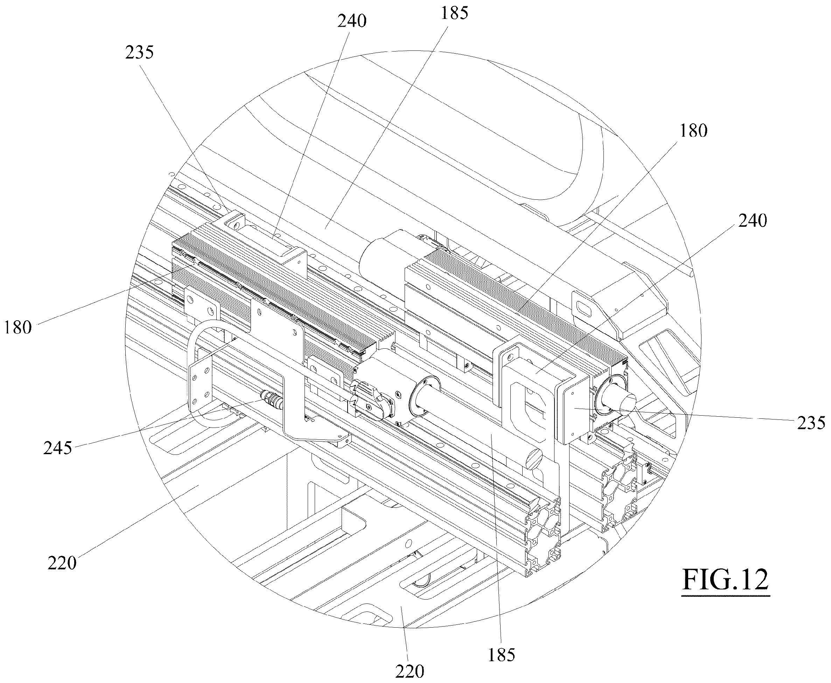

In order to comply with these specifications (see also the detail of Figure 12), the connection between each rear side rib 150 and the primary 180 of the respective linear electric traverse motor 175 can be obtained, for example, by means of a channel guide 235, vertically oriented and fixed to the primary 180, in which an appendage 240 integral with the rear side rib 150, for example firmly fixed to the respective supporting frame 220, is slidingly received.

An absolute encoder 245, e.g., an absolute linear encoder, which is adapted to measure the position of the primary 180 with respect to the secondary 185 along the movement direction B is also preferably associated with each linear electric traverse motor 175.

These absolute encoders 245 are in general electrical measuring devices which, possibly after a single setting step following their installation, are able to encode, in their electrical output signal, the exact instantaneous position of the primary 180 with respect to the secondary 185, for example by attributing to each possible position a unique signal value, without the need to determine it on the basis of a displacement from an initial reference, and which preferably are able to keep the position information stored, even after an interruption in power supply.

The absolute encoders 245 can therefore be connected with the aforementioned electronic control unit of the linear electric traverse motors 175 which, thanks to them, can be able to automatically move and stop the rear side ribs 150 with extreme precision and rapidity in the positions required from time to time, either to adjust the reciprocal distance thereof (e.g., based on the format), or to place them in the start position of a duty cycle, or to dynamically move them and align them with the various outflow lanes 125, during the execution of the duty cycle itself. Although in this embodiment reference has been made to absolute encoders 245 (e.g. linear), it is not excluded that, in other embodiments, they may be replaced by incremental encoders (e.g., linear) or any other type.

Remaining with the rear side ribs 150, each thereof can be of the extendable type along a direction parallel to the feed direction A, i.e., it can alternately pass from a maximum length configuration (illustrated in the attached figures) to a minimum length configuration (not illustrated) and vice versa.

In practice, passing from the minimum length configuration to the maximum length configuration, the overall extension of each rear side rib 150 (in the feed direction A) increases, particularly when approaching the outflow lanes 125.

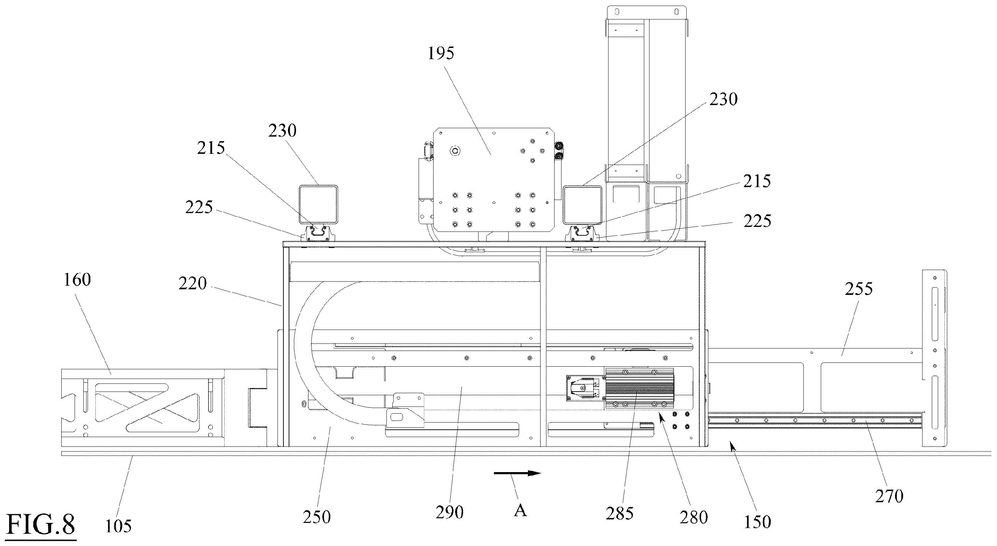

To achieve this extensibility (see for example Fig. 8), each rear side rib 150 can comprise a first fixed portion 250, e.g., fixed to the corresponding supporting frame 220, and a second movable portion 255, which is slidingly coupled to the first portion 250, e.g., in a substantially telescopic manner, so as to be able to slide with respect thereto in a sliding direction, parallel to the feed direction A, between a retracted position and an extracted position.

When the second portion 255 is in the retracted position, the rear side rib 150 assumes the minimum length configuration; when it is instead in the extracted position (as illustrated in the figures), the rear side rib 150 assumes the maximum length configuration.

The sliding coupling between the first portion 250 and the second portion 255 can be achieved by means of one or more linear guides, fixed to one of the two portions, and one or more sliding blocks, fixed to the other portion and slidingly coupled to a respective linear guide.

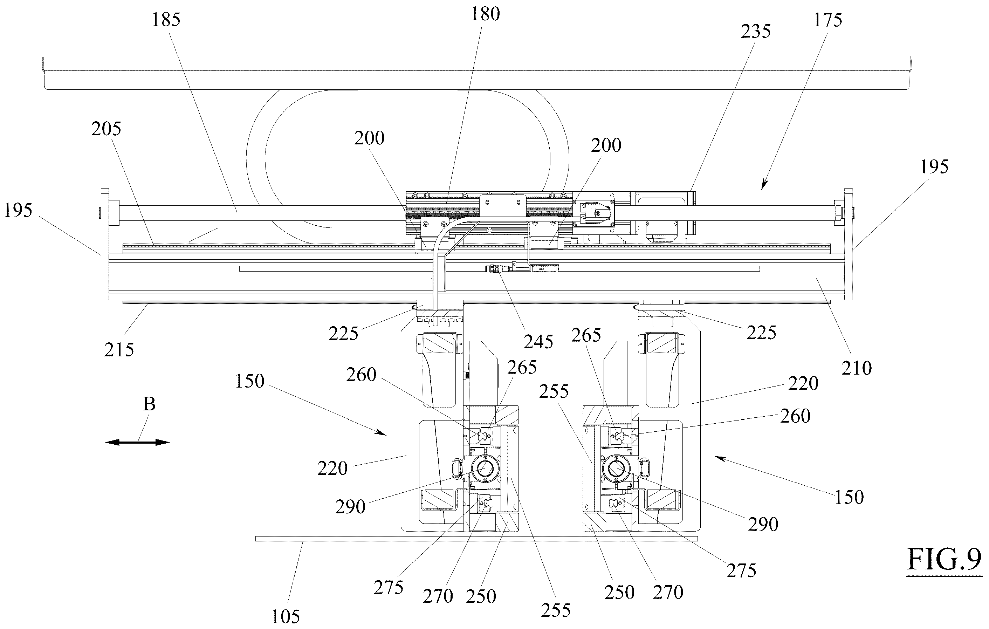

For example (see Figures 7-9), in the embodiment illustrated, to the first fixed portion 250 of each rear side rib 150 is fixed a first linear guide 260, oriented parallel to the feed direction A, to which a sliding block 265 is slidingly coupled, which is fixed to the second movable portion 255.

At the same time, to the second movable portion 255 of each rear side rib 150, a second linear guide 270 can be fixed, also oriented parallel to the feed direction A, which is slidingly coupled to a sliding block 275 which is fixed to the first fixed portion 250.

In particular, the first and second linear guides 260 and 270 can be arranged at different heights, e.g. the first higher than the second, and can possibly be substantially coplanar.

The sliding block 265 can therefore be placed near the front end of the second portion 255, i.e., that farthest from the outflow lanes 125, while the sliding block 275 can be placed near the rear end of the first portion 250, i.e., that closest to the outflow lanes 125.

Thereby, when the second portion is in the retracted configuration, the linear guides 260 and 270, which can have essentially the same length, are practically superimposed, while when the second portion is in the extracted configuration (as illustrated in the figures), they are staggered along the feed direction A.

To move the second portion 255 from the retracted position to the extracted position and vice versa, each rear side rib 150 comprises a respective linear electric drive motor 280.

Each linear electric drive motor 280 has a similar general shape to the linear electric traverse motors 175 described above.

In other words, it comprises a primary 285 and a secondary 290 reciprocally movable along the sliding direction parallel to the feed direction A, wherein the secondary 290 is a body extending linearly along said sliding direction, typically for a greater length with respect to the primary 285, while the primary 285 contains electrical windings which, when energised by an electric current, typically an alternating electric current, are adapted to generate a variable magnetic field along the same sliding direction, which is adapted to interact with the secondary 290, to cause the relative movement of the primary 285 with respect to the secondary 290.

This interaction can be due to the presence of permanent magnets along the secondary 290.

However, also in this case, a preferred embodiment provides that each linear electric drive motor 280 is an inductive type of linear electric motor, the secondary 290 of which is free of permanent magnets and is made of a material, typically conductive and preferably ferromagnetic, for example a metallic material, including steel, aluminium or copper, in which the variable magnetic field generated by the primary 285 is capable of inducing eddy currents (or Foucault currents), which in turn generate a magnetic field thereof which, interacting with the magnetic field of the primary 285, creates an electromagnetic force which causes the relative displacement between primary 285 and secondary 290, along the sliding direction.

In the embodiment illustrated, the secondary 290 of each linear electric drive motor 280 is configured as a rod (or bar), in this case having a circular cross-section, which is axially and slidingly threaded in a through hole, in this case a cylindrical through hole, of the corresponding primary 285.

According to a preferred embodiment of the finding, an example of which is illustrated in the figures, the secondary 290, e.g., the aforesaid rod, is fixed to the first portion 250 of the respective rear side rib 150, e.g., at an intermediate height between the linear guides 260 and 270 and, if necessary, substantially coplanar thereto, thus always being stationary, while the primary 285 is actively movable with respect to the secondary 290, along the sliding direction.

The second portion 255 of each rear side rib 150 can then be constrained to the primary 285 of the respective linear electric drive motor 280, so as to follow the displacements thereof.

According to a preferred embodiment of the finding, the constraint between the second portion 255 of each rear side rib 150 and the primary 285 of the respective linear electric drive motor 280 is a direct bilateral constraint, i.e., a constraint by which, at least in the displacements along the sliding direction, the second portion 255 is integral with the primary 285 of the respective linear electric drive motor 280.

Thereby, each displacement of the primary 285 always corresponds to an equal displacement of the second portion 255 of the respective rear side rib 150, without the need for motion drive systems.

At the same time, it is also preferable for the aforementioned constraint to leave the second portion 255 of each rear side rib 150 vertically free, viz., free to make vertical displacements with respect to the primary 285 of the respective linear electric drive motor 280.

Thereby, substantially all the weight of the second portions 255 weighs on the linear guides 260 and 270, thus reducing the internal friction of the linear electric drive motors 280, whose overall energy efficiency is therefore advantageously increased.

The linear electric drive motors 280 can be connected with an electronic control unit (not shown), e.g., with the same one which also controls the linear electric traverse motors 175, which is configured to control the operation thereof.

An incremental encoder, e.g., an incremental linear encoder, which is adapted to measure the position of the primary 285 with respect to the secondary 290 along the movement direction B is also preferably associated with each linear electric drive motor 280.

In general, these incremental encoders are electrical measuring devices, simpler and more inexpensive with respect to absolute encoders, the electrical output signal of which is proportional to the displacement of the primary 285 with respect to the secondary 290.

From these it is therefore possible to obtain the speed and acceleration of the primary 285 and only indirectly, by constantly counting the electrical output signals, its absolute position, following an initial reference search operation, to be performed at each limit switch.

However, since the second portions 255 of the rear side ribs 150 normally only need to move between the retracted position and the extracted position, these incremental encoders may still be adequate for the purpose.

They can therefore be connected with the electronic control unit of the linear electric drive motors 280, which can thus be able to automatically move and stop the second portions 255 with sufficient precision and speed in the positions required from time to time by the duty cycle.

Although in this embodiment reference has been made to incremental encoders (e.g. linear), it is not excluded that, in other embodiments, they may be replaced by absolute encoders (e.g., linear) or any other type.

In order to allow an adjustment of the width of the conveying corridor 135, also at its inlet portion 140, the apparatus 100 preferably comprises motorised adjustment means adapted to vary the reciprocal distance between the front side ribs 155, along the flanking direction.

As can be seen in the details of Figures 13 and 14, these adjustment means can comprise, for example, a threaded shaft 305 having axis parallel to the flanking direction, which can be arranged above the front side ribs 155, e.g., supported between two sidewalls 300 fixed to the support structure 190.

The threaded shaft 305 comprises a first section with a thread to the right and a second section with a thread to the left.

A respective nut 310 is screwed onto each of these sections, which is prevented from rotating around the axis of the threaded shaft 305, so that any rotation of the latter causes both nuts 310 to slide simultaneously, reciprocally approaching or distancing along the axis of the threaded shaft 305.

Each nut 310 is then constrained to a respective front side rib 155, so that the latter is integral therewith in the displacements along the axis of the threaded shaft 305.

For example, each front side rib 155 can be fixed to the respective nut 310 by means of a corresponding supporting frame 315, which is fixed below to the respective front side rib 155, e.g., to the fixed portion 165 thereof, and is fixed above to the respective nut 310.

To prevent the nuts 310 from rotating and slidingly guiding the supporting frames 315, the latter can be slidingly coupled to one or more linear guides 320, extending parallel to the flanking direction, which can be fixed to the support structure 190, for example between the same sidewalls which are responsible for also supporting the threaded shaft 305.

Finally, the adjustment means comprise an electric motor 325, preferably of a rotary type, for example a stepper type electric motor, which can be fixed to the support structure 190 and is adapted to rotate the threaded shaft 305.

The electric motor 325 can be connected with an electronic control unit (not shown), e.g., the same one which also controls the linear electric traverse motors 175 and/or linear electric drive motors 280, which is configured to control the operation thereof.

An encoder, e.g., a rotary encoder, is also preferably associated with the electric motor 325; it is adapted to measure the position of the rotor of the electric motor 325 with respect to its stator, around the reciprocal rotation axis.

Also in this case, the encoder can be an absolute, incremental or any other type of encoder (e.g. rotary).

This encoder can therefore be connected with the electronic control unit, which thanks thereto can control the electric motor 325 so as to achieve sufficiently precise displacement and positioning of the front side ribs 155.

In particular, the electronic control unit can be configured to automatically vary the distance between the front side ribs 155 whenever the apparatus 100 is asked to operate with objects having a different format (format change).

In such circumstances, the electronic control unit can be configured to vary, through the control of one or both of the linear electric traverse motors 175, also the distance between the rear side ribs 150, for example in the same manner as the front ones.

By means of the control of the same linear electric traverse motors 175, the electronic control unit can then be configured to align the outlet portion 145 of the conveying corridor 135 with a first outflow lane 125 provided for example by a duty cycle.

After that, the electronic control unit can be configured to activate the conveyor plane 105 so that the flow of objects slides continuously from the inflow lane 120 to the outflow lane 125.

Whenever the duty cycle requires objects to be conveyed to a subsequent outflow lane 125, the electronic control unit can be configured, firstly, to control both linear drive motors 280, so that they simultaneously move the second portions 255 of both rear side ribs 150, from the retracted position to the extracted position, bringing them closer to the outflow lane 125.

The feeding speed of the second portions 255 is preferably equal to the feeding speed of the objects on the conveyor plane 105, so as to accompany them.

Thereafter, keeping the second portions 255 in the extracted position, the electronic control unit can be configured to control both the linear traverse motors 175 so that they simultaneously move the rear side ribs 150 in transverse direction, keeping them at the same distance, until the outlet portion 145 of the conveying corridor 135 is aligned with the new outflow lane 125.

Once this movement has been completed, the electronic control unit can finally be configured to control both linear drive motors 280, so that they simultaneously retract the second portions 255 of both rear side ribs 150, from the extracted position back to the retracted position, moving them away from the outflow lane 125.

It should be emphasised that the preceding steps related to lane changes are preferably carried out dynamically, while the conveyor plane 105 remains in operation, viz., without interrupting the continuous flow of objects through the apparatus 100.

It should also be noted that a lane change can occur after a certain number of objects, determined by the duty cycle, have been conveyed to the outflow lane 125 to be moved.

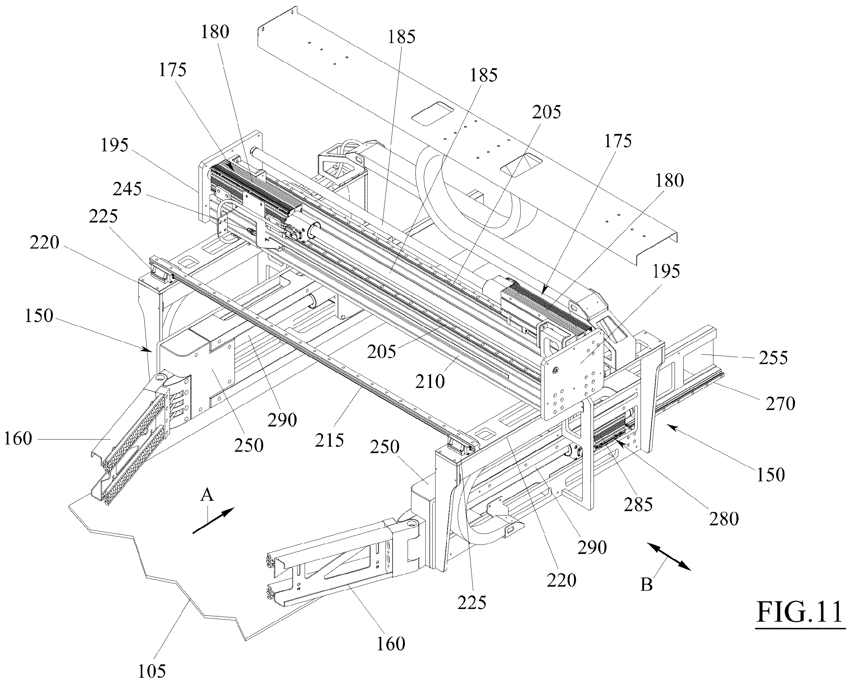

This number can be counted by the electronic control unit by means of a sensor 330 located at the rear end of the second portion 255 of at least one of the rear side ribs 150, for example a photocell sensor having an optical beam which transversely intercepts the conveying corridor 135. In the event of maintenance, the electronic control unit can be configured so that, e.g., upon the command of an operator from the control panel, the linear traverse motors 175 independently move the rear side ribs 150 to the corresponding machine zeroes, e.g., by fully retracting them as illustrated in Figure 11.

Thereby, the maintenance of the individual rear side ribs 150 can be carried out on both sides of the apparatus, avoiding the need for workers to enter inside the apparatus 100, thus reducing maintenance and downtime.

Obviously, an expert in the field may make several technical-applicative modifications to the above description, without departing from the scope of the invention as hereinafter claimed.

## Claims

1. An apparatus (100) for sorting objects, comprising:
- a conveyor plane (105) adapted to receive said objects and advance them along a prefixed feed direction (A), from an inlet zone (110) to an outlet zone (115),
- a conveying corridor (135), placed above the conveyor plane (105), having an inlet portion (140) aligned with an inflow lane (120) placed in the inlet zone (110), and an outlet portion (145) adapted to be selectively aligned with each outflow lane (125) of a plurality of outflow lanes (125) placed parallel to each other in the outlet zone (115),
wherein the outlet portion (145) of said conveying corridor comprises a pair of side ribs (150), extending parallel to the feed direction (A), which are reciprocally side by side and spaced apart along a transverse direction, parallel to the conveyor plane (105) and orthogonal to the feed direction (A), and
- two linear electric motors (175), each of which is adapted to move one of said side ribs (150), independently of the other, along a movement direction (B) parallel to said transverse direction.

2. An apparatus (100) according to claim 1, wherein each linear electric traverse motor (175) comprises:
- a primary (180) containing electrical windings which, when energised by an alternating electric current, are adapted to generate a variable magnetic field along said movement direction (B), and
- a secondary (185), extending linearly along said movement direction (B), with which said magnetic fields are adapted to interact to cause a relative movement of the primary (180) with respect to the secondary (185), along said movement direction (B),
wherein the secondary (185) of each linear electric traverse motor (175) is fixed to a support structure (190), while each side rib (150) is constrained to the primary (180) of the respective linear electric traverse motor (175), so as to be integral therewith it the displacements along the movement direction (B), and wherein
each side rib (150) is vertically free with respect to the primary (180) of the respective linear electric traverse motor (175), and is slidingly coupled and vertically supported to/from one or more linear guides (215) fixed to the support structure (190), oriented parallel to the movement direction (B).

3. An apparatus (100) according to claim 1, wherein each linear electric traverse motor (175) is an inductive type linear electric motor, the secondary (185) of which has no permanent magnets.

4. An apparatus (100) according to claim 2 or 3, wherein the secondary (185) of each linear electric traverse motor (175) is shaped like a rod, which is axially and slidingly threaded in a through hole of the corresponding primary (180).

5. An apparatus (100) according to any of the preceding claims, wherein each linear electric traverse motor (175) is operatively connected to an encoder (245), which is adapted to measure the position of the primary (180) with respect to the secondary (185), along the movement direction (B).

6. An apparatus (100) according to any of the preceding claims, wherein which each side rib (150) comprises:
- a first portion (250),
- a second portion (255) slidingly coupled to the first portion (250) so as to slide with respect thereto in a sliding direction, parallel to the feed direction (A), between a retracted position and an extracted position, and
- a linear electric drive motor (280) adapted to move the second portion (255) in said sliding direction.

7. An apparatus (100) according to claim 6, wherein each linear electric drive motor (280) comprises:
- a primary (285) containing electrical windings which, when energised by an alternating electric current, are adapted to generate a variable magnetic field along said sliding direction, and
- a secondary (290), extending linearly along said sliding direction, with which said magnetic fields are adapted to interact to cause a movement of the primary (285) with respect to the secondary (290), along the sliding direction.

8. An apparatus (100) according to claim 7, wherein the secondary portion (290) of each linear electric drive motor (280) is fixed to the first portion (250) of the respective side rib (150), while the second portion (255) of each side rib (150) is constrained to the primary (285) of the respective linear electric drive motor (280), so as to be integral therewith in the displacements along said sliding direction.

9. An apparatus (100) according to any one of claims 6 to 8, wherein the second portion (255) of each side rib (150) is vertically free with respect to the primary (285) of the respective linear electric drive motor (280), and is vertically supported by the corresponding first portion (250).

10. An apparatus (100) according to any one of claims 6 to 9, wherein each linear electric drive motor (280) is an inductive type linear electric motor the secondary (290) of which has no permanent magnets.

11. An apparatus (100) according to any one of claims 6 to 10, wherein the secondary (290) of each linear electric drive motor (280) is shaped like a rod, which is axially and slidingly threaded in a through hole of the corresponding primary (285).

12. An apparatus (100) according to any one of claims 6 to 11, wherein each linear electric drive motor is operatively connected to an encoder, which is adapted to measure the position of the primary (285) with respect to the secondary (290), along the feed direction.

13. An apparatus (100) according to any one of the preceding claims, wherein the inlet portion (140) of the conveying corridor (135) comprises a pair of front side ribs (155), extending parallel to the feed direction (A), which are reciprocally side by side and spaced apart along a flanking direction, parallel to the conveyor plane (105) and orthogonal to the feed direction (A), motorised adjustment means (305, 325) being provided for adjusting the reciprocal distance between said front side ribs (155), along said flanking direction.

14. An apparatus (100) according to claim 13, wherein said adjustment means comprise:
- a threaded shaft (305) having an axis parallel to said flanking direction and rotatably coupled to a support structure (190),
wherein said threaded shaft comprises a first section with a thread to the right and a second section with a thread to the left,
- two nuts (310) screwed onto the first and second sections of said threaded shaft (305), respectively, and
- an electric motor (325) adapted to rotate the threaded shaft (305) around the axis thereof,
wherein each front side rib (155) is constrained to a respective one of said nuts (310), so as to be integral therewith in the displacements along the axis of the threaded shaft (305).

15. An apparatus (100) according to claim 14, wherein each rear side rib is slidingly coupled and vertically supported to/from one or more linear guides (320) fixed to said support structure (190), oriented parallel to the second alignment direction.
